Europäisches Patentamt

European Patent Office

Office européen des brevets

(19)

(11) EP 0 738 793 B1

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.⁶: **D02G 3/44**, D02J 1/08, D03D 1/02, B60R 21/16

(21) Anmeldenummer: **96105985.4**

(22) Anmeldetag: **17.04.1996**

(54) **Getangeltes Synthesefilamentgarn für die Herstellung von technischen Geweben**

Yarn made of interlaced synthetic filaments for the production of technical woven fabrics

Fil constitué de filaments synthétiques entrelacés pour la production de tissus techniques

(84) Benannte Vertragsstaaten:
**BE DE ES FR GB IT NL PT SE**

(30) Priorität: **22.04.1995 DE 19514898**

(43) Veröffentlichungstag der Anmeldung:
**23.10.1996 Patentblatt 1996/43**

(73) Patentinhaber: **Akzo Nobel N.V.**
**6824 BM Arnhem (NL)**

(72) Erfinder:
• **Graefe, Hans Albert**
**58332 Schwelm (DE)**
• **Siejak, Volker**
**47259 Duisburg (DE)**

• **Krummheuer, Wolf Rüdiger, Dr.**
**42119 Wuppertal (DE)**
• **Weber, Marcus, Dr.**
**63906 Erlenbach (DE)**

(74) Vertreter: **Fett, Günter et al**
**Akzo Nobel GmbH**
**Kasinostrasse 19-21**
**42103 Wuppertal (DE)**

(56) Entgegenhaltungen:
**EP-A- 0 501 295        EP-A- 0 607 798**
**EP-A- 0 635 591**

• **PATENT ABSTRACTS OF JAPAN vol. 17, no. 159 (M-1389), 29.März 1993 & JP-A-04 325341 (TORAY IND INC ), 13.November 1992,**

**Beschreibung**

Die Erfindung betrifft ein getangeltes ungeschlichtetes Synthesefilamentgarn, besonders ein Synthesefilamentgarn für die Herstellung von Airbaggeweben und anderen Technischen Geweben, mit einem Garntiter von 100 - 1 000 dtex.

Gewebe für die Herstellung von Airbags müssen eine Reihe sehr unterschiedlicher Bedingungen erfüllen. Neben der besonders wichtigen, gezielt eingestellten Luftdurchlässigkeit, müssen diese Gewebe eine gute Alterungsbeständigkeit, eine hohe Festigkeit, eine gute Faltbarkeit und einen hohen Grad an Flexibilität beim Auslösen des Airbags im Falle eines Aufpralls aufweisen. Entsprechend den besonderen Forderungen an die Eigenschaften der Gewebe werden auch sehr spezifische Forderungen an die hierfür einzusetzenden Garne gestellt. Diese beziehen sich einmal auf deren Auswirkungen auf die Gewebeeigenschaften, zum anderen auf deren Verarbeitungsverhalten bei der Gewebeherstellung.

In der Praxis hat es sich als schwierig erwiesen, alle Forderungen in der besonders von den Autombilherstellern gewünschten Weise zu erfüllen.

So wurden die ersten Airbags bevorzugt aus beschichteten Geweben hergestellt. Diese haben sich nicht nur wegen der Herstellungskosten, sondern auch wegen einiger Nachteile beim Gebrauch als nicht besonders günstig erwiesen.

Die nach dem vermehrten Aufkommen unbeschichteter Airbaggewebe zunächst eingesetzten Garne hatten meist relativ hohe Garn- und Filamenttiter. Hiermit konnten zwar in den meisten Fällen die geforderten Luftdurchlässigkeiten und Festigkeiten erzielt werden, bezüglich der Faltbarkeit und der Flexibilität befriedigten diese Gewebe jedoch häufig nicht.

Die genannten Garne kamen bei der Gewebeherstellung in der Kette fast immer geschlichtet, in selteneren Fällen gezwirnt bzw. gedreht zum Einsatz. Der Schuß bestand häufig aus ungeschlichteten und ungedrehten Garnen, jedoch auch gedrehte Garne wurden im Schuß eingesetzt.

Sowohl das Zwirnen bzw. Drehen als auch das Schlichten erhöhen die Herstellungskosten der Garne und damit auch der Gewebe erheblich. Dazu kommt, daß die Schlichte nach der Gewebeherstellung wieder entfernt werden muß, das Gewebe muß also entschlichtet werden. Dieser Prozeß ist aus ökonomischer und ökologischer Sicht problematisch, da nicht nur Kosten für das Entschlichten aufzuwenden sind, sondern darüberhinaus zusätzliche Kosten für die aus ökologischen Gründen zwingend notwendige Aufbereitung der Entschlichtungsbäder anfallen.

Beim Zwirnen bzw. Drehen, das ungefähr eine ähnliche Kostengrößenordnung erfordert wie das Schlichten, fallen zwar die Entschlichtungskosten weg, hier ergibt sich aber ein anderer Nachteil, da gezwirnte bzw. gedrehte Garne erfahrungsgemäß "körnigere" Gewebe als ungezwirnte bzw. ungedrehte Garne ergeben. Darüberhinaus ist es bei Verwendung gezwirnter bzw. gedrehter Garne schwieriger, die gewünschte Luftdurchlässigkeit gezielt einzustellen.

Eine Verbesserung der Faltbarkeit und der Flexibilität läßt sich erreichen, wenn Garne mit einem geringeren Titer der Einzelfilamente zum Einsatz kommen. Solche Garne wurden für die Herstellung von Airbaggeweben bereits vorgeschlagen.

In EP-A 442 373 wird für die Herstellung unbeschichteter Airbaggewebe ein Polyesterfilamentgarn mit einem Garntiter von 250 - 550 dtex und einem Filamenttiter < 4 dtex beschrieben. Die Garne sollen, mindestens in der Kette, mit einer Drehung von 110 - 130 T/m zum Einsatz kommen. Hier ergibt sich also der obengenannte Nachteil des Einsatzes gezwirnter bzw. gedrehter Garne.

In JP-A 04 - 209 846 wird für Airbaggewebe der Einsatz von Filamentgarnen mit einem Garntiter von 210 - 750 den (235 - 840 dtex) und einem Filamenttiter < 5 den (5,5 dtex) empfohlen. Die Garne können ungedreht zum Einsatz kommen, es wird aber auch ein gedrehtes Garn für die Kette mit einer Drehung von < 200 T/m vorgeschlagen. Beim Einsatz gedrehter Garne ergeben sich die obengenannten Nachteile, wird ein ungedrehtes Garn in der Kette verwendet, so dürfte es kaum möglich sein, dieses bei hoher Gewebedichte in befriedigender Weise ohne Schlichte auf der Webmaschine verarbeiten zu können.

Der Einsatz extrem feiner Einzelfilamente mit einem Titer < 2 den (2,2 dtex) wird in JP-A 05 - 093 340 für Airbag-Filtergewebe beschrieben. Hier ist allerdings nicht erkennbar, ob diese Garne ungeschlichtet zum Einsatz kommen sollen, was auch praktisch kaum möglich sein dürfte.

Polyamid-Garne mit Filamenttitern von 1 - 6 den (1,1 - 6,7 dtex) bei Garntitern von 70 - 840 den (80 - 940 dtex) werden in JP-A 06 - 041 844 vorgeschlagen. Hier wird keine Angabe gemacht, ob die Garne geschlichtet oder ungeschlichtet Verwendung finden sollen.

Die Verarbeitung von feinfilamentigen Garnen ist, besonders bei Kettgarnen, wie aus der Webereipraxis bekannt ist, wesentlich schwieriger als das Verweben grobfilamentiger Garne, da bei feinfilamentigen Garnen die Gefahr von Filamentbrüchen und damit der Entstehung von sogenannten Filament-Aufschüben, die zu Stillständen der Webmaschine sowie zu Fehlern im Gewebe führen können, deutlich größer ist. Deshalb war es gerade bei feinfilamentigen Garnen bislang besonders wichtig, diese mit einer ausreichend hohen Menge Schlichte zu versehen, um ein problemloses Verarbeiten auf der Webmaschine zu gewährleisten.

In der Praxis der Chemiefaserverarbeitung ist bekannt, daß ein Verwirbeln der Einzelfilamente, wofür üblicherweise die Bezeichnung Tangelung verwendet wird, eine Alternative zum Schlichten sein kann.

Die Verarbeitung getangelter Garne zu Geweben für Airbags ist bekannt. Diese wird in CA-A 974 745 beschrieben. Wie aus dem Ausführungsbeispiel dieses Dokumentes hervorgeht, bezieht sich die Empfehlung, getangelte Garne einzusetzen, auf Garne mit einem hohen Filamenttiter (6,7 dtex). Außerdem werden keine Angaben gemacht, mit welchem Tangelungsgrad die Garne zum Einsatz kommen sollen und welche Stabilität die Verwirbelungspunkte haben müssen.

In JP-A 06 - 306 728 wird ein Airbaggewebe beschrieben, das aus getangelten Multifilamentgarnen mit einem Filamenttiter unter 3,3 dtex hergestellt wird. Der Tangelungsgrad der Garne soll mindestens 20 pro m betragen, dies bedeutet eine mittlere Öffnungslänge unter 5 cm. Aus diesem Dokument läßt sich keine Lehre entnehmen, welche Stabilität die Verwirbelungspunkte aufweisen müssen, um eine problemlose Verarbeitung in der Weberei zu gewährleisten.

Auch für die Herstellung von Geweben aus dem Bekleidungsbereich wurde der Einsatz getangelter Garne schon oft beschrieben. Ein Beispiel hierfür ist DE-A 4 327 371, wo besonders die Verarbeitung getangelter Garne mit geringer Öffnungsneigung der Verwirbelungspunkte der Garne bei angepaßter Spannung auf der Webmaschine beschrieben wird.

Somit läßt sich aus dem Stand der Technik nicht ableiten, welche Schritte unternommen werden müssen, um feinfilamentige Garne, die ohne Schlichte in befriedigender Weise zu Technischen Geweben, besonders zu Airbaggeweben, verarbeitet werden können, zur Verfügung stellen zu können.

Es bestand deshalb die Aufgabe, für die Herstellung von unbeschichteten Airbaggeweben geeignete Garne zur Verfügung zu stellen, die einmal kostengünstig ohne negative Beeinflussung der geforderten Gewebeeigenschaften zu Geweben verarbeitet werden können und die darüberhinaus in den daraus hergestellten Geweben noch besonders im Hinblick auf die Faltbarkeit und die Flexibilität eine Verbesserung gegenüber den bislang vorwiegend eingesetzten Airbaggeweben ergeben.

Überraschend wurde gefunden, daß diese Aufgabe in besonders vorteilhafter Weise gelöst werden kann, wenn getangelte Filamentgarne gemäß Anspruch 1 eingesetzt werden. Auf diesem Wege ist es möglich, kostengünstig und ohne Probleme beim Webvorgang, weiche und gut faltbare Airbaggewebe, bei denen die Einstellung der gewünschten Luftdurchlässigkeit keine Probleme bereitet, herzustellen.

Airbags bestehen normalerweise aus einem Kontakt- und einem Filterteil, was in den meisten Fällen durch Vernähen von Geweben mit unterschiedlichen Luftdurchlässigkeiten realisiert wird. Daneben existieren auch einstückig gewebte Airbags mit Gewebepartien mit unterschiedlichen Luftdurchlässigkeiten sowie Airbags aus einer Gewebepartie mit Luftaustrittsöffnungen auf der Airbagrückseite.

Der Kontaktteil des Airbags ist der Teil, gegen den beim Auslösen der Airbagfunktion das von einem Generator erzeugte Gas strömt. Dieser Teil ist dem Fahrzeuginsassen benachbart. Hierfür wird eine niedrige Luftdurchlässigkeit von üblicherweise < 20 l/dm$^2$•min, bevorzugt < 10 l/dm$^2$•min (gemessen bei 500 Pa Prüfdifferenzdruck) gefordert.

Um ein weiches Auffangen des Fahrzeuginsassen im Falle eines Unfalls zu gewährleisten, muß dem in den Airbag einströmenden Gas die Möglichkeit eines partiellen Entweichens gegeben werden. Dies wird durch den rückseitigen Filterteil oder beim Beifahrer-Airbag durch die Seitenteile des Airbags erreicht. Für den Filterteil werden, je nach Fahrzeugtyp, Luftdurchlässigkeiten zwischen 20 und 100 l/dm$^2$•min (gemessen bei 500 Pa Prüfdifferenzdruck) benötigt. Dieser Teil des Airbags hat darüberhinaus die Aufgabe, heiße Partikel aus dem Generatorgas zurückzuhalten, also vor dem Austreten des Gases in den Fahrgastraum auszufiltern.

Für Airbags werden bevorzugt Polyamidgarne eingesetzt, wobei Polyamid 6.6, Polyamid 4.6 und Polyamid 6 besonders bevorzugt werden. Aber auch andere Faserarten wie beispielsweise Polyesterfasern finden für die Herstellung von Airbaggeweben teilweise Einsatz. Die Erfindung soll jedoch nicht auf eine bestimmte Faserart beschränkt werden, sondern alle synthetischen Filamentgarne umfassen, unter denen Garne aus Polyamid- und Polyesterfasern bevorzugt und Garne aus Polyamid 6.6-, Polyamid 4.6- und Polyamid 6- Fasern besonders bevorzugt werden.

Die erfindungsgemäßen Garne haben Garntiter von 100 - 1 000 dtex, bevorzugt 200 - 500 dtex. Die Filamenttiter dieser Garne liegen bei 5 dtex oder niedriger, sind also nicht höher als 5 dtex. Bevorzugt wird ein Filamenttiter von 2,4 - 5 dtex, besonders bevorzugt von 3,4 - 5 dtex. Der niedrige Filamenttiter ist besonders für die Faltbarkeit des Airbaggewebes von Bedeutung. Beispiele einsetzbarer Garntypen sind 235 f 72 mit einem Filamenttiter 3,26 dtex, 350 f 144 mit einem Filamenttiter 2,43 dtex, 470 f 144 mit einem Filamenttiter 3,26 dtex, 700 f 140 mit einem Filamenttiter 5,0 dtex, 700 f 144 mit einem Filamenttiter 4,86 dtex, 700 f 210 mit einem Filamenttiter 3,33 dtex und 940 f 280 mit einem Filamenttiter 3,36 dtex. Die hier genannten Garntypen sind als Beispiele und nicht einschränkend zu verstehen.

Die zur Herstellung von Airbaggeweben geeigneten Polyamid-Garne haben eine Festigkeit von ca. 60 cN/tex, bevorzugt über 60 cN/tex, und eine Dehnung von 15-30 %. Bei Einsatz von Polyestergarnen zur Herstellung von Airbaggeweben sind die Festigkeiten ebenfalls bei ca. 60 cN/tex, bevorzugt über 60 cN/tex, und die Dehnungen liegen bei 10 - 25 %.

Bei den Schrumpfwerten muß zwischen Garnen für Airbag-Kontakt- und Filtergewebe unterschieden werden.

So ist für Polyamidgarne, die zu Filtergeweben verarbeitet werden sollen, ein Heißluft-Schrumpf von 1 - 4 % (gemessen bei 190 °C) notwendig. Polyamidgarne, die zu Kontaktgeweben weiterverarbeitet werden sollen, müssen dagegen einen Heißluft-Schrumpf von 5 - 9 % (gemessen bei 190 °C) aufweisen.

Bei Verwendung von Polyestergarnen sind die Heißluftschrumpfwerte 1 - 4 % (gemessen bei 190 °C) für Filtergewebe und 5 - 10 % (gemessen bei 190 °C) für Kontaktgewebe.

Die Herstellung der erfindungsgemäßen Garne erfolgt nach den in der Chemiefaserindustrie üblichen Methoden. Für das Erspinnen von Filamentgarnen aus Polyamiden oder Polyestern kommen normalerweise Schmelzspinnverfahren zum Einsatz. Die Einstellung des gewünschten Titers erfolgt nach den bekannten Methoden, besonders durch die Steuerung der Durchsatzmenge an der Spinndüse.

Auch die Tangelung ist ein in der Chemiefaserindustrie häufig praktiziertes Verfahren. Hierfür sind auch Bezeichnungen wie Verwirbelung oder Intermingeln üblich. Die mittlere Öffnungslänge wird durch ein genaues Aufeinanderabstimmen der Geometrie der Tangeldüse, der Spannung und Geschwindigkeit beim Einlaufen in die Tangeldüse und der eingebrachten Luftmenge gesteuert. Diese Prozeßbedingungen für das Tangeln sind vom Garntiter und von der auf das Garn aufgebrachten Präparation abhängig und müssen somit auf diese Parameter abgestimmt werden. Die Einstellung der gewünschten mittleren Öffnungslänge erfolgt üblicherweise, ausgehend von den praktischen Betriebserfahrungen, durch orientierende Vorversuche.

Wichtig ist bei den erfindungsgemäßen Garnen die Einhaltung einer bestimmten mittleren Öffnungslänge von 2 - 10 cm, bevorzugt 2 - 6 cm. Es ist auch möglich, mit Garnen im Bereich von von 6 - 9 cm mittlerer Öffnungslänge gute Verarbeitungsergebnisse zu erzielen. Höhere mittlere Öffnungslängen ergeben keine befriedigenden Verarbeitungseigenschaften auf der Webmaschine, da diese keinen ausreichenden Garnschluß ermöglichen und somit keine befriedigende Einbindung der bruchanfälligen feinen Einzelfilamente in den Garnverband möglich ist. So wird sich beispielsweise ein Filamentbruch eines Kettgarns üblicherweise nur bis zum nächsten Verwirbelungspunkt aufschieben und mit diesem am Webstuhl durch die Litze laufen. Ist der nächste Verwirbelungspunkt weit entfernt, dann entsteht eine verhältnismäßig große Länge des gebrochenen Filamentes, die dann aufgeschoben wird und schließlich zu einer Dickstelle führt, die die Litze nicht mehr passieren kann, wodurch möglicherweise ein Garnbruch ausgelöst wird. Gleichzeitig besteht auch die Möglichkeit, daß das gebrochene Filament von dem in der Webkette laufenden Nachbargarn aufgenommen wird und in diesem den genannten Fehler ebenso auslöst wie in dem Garn, aus dem das Filament stammt, nämlich Brüche benachbarter Garne wegen einer Behinderung des Durchgangs an der Litze. In diesem Falle wird von sogenannten Sympathiebrüchen gesprochen, die sich im Gewebe in Fehlern, die dem Webereifachmann unter Bezeichnungen wie "Spatten" oder "Nester" bekannt sind, bemerkbar machen.

In ähnlicher Weise können sich zu hohe mittlere Öffnungslängen auch bei Schußgarnen auswirken. Aus dem Garnverband abstehende Filamente, für die in der Webereipraxis der Ausdruck "Filamentverlierer" üblich ist, werden, beispielsweise bei der Verarbeitung auf einer Greiferwebmaschine, vom Greifer nicht erfaßt und führen zu Garnaufschüben bzw., daraus resultierend, zu Dickstellen im Garn.

Mittlere Öffnungslängen unterhalb des beanspruchten Bereichs sind in der Praxis nur mit Problemen realisierbar. Außerdem kann beim Unterschreiten der beanspruchten Untergrenze eventuell ein Rückgang der Garnfestigkeit und/oder der Garndehnung erfolgen. Darüberhinaus wird mit diesen geringen mittleren Öffnungslängen ein sogenanntes körniges Gewebe erhalten, wodurch eventuell die Luftdurchlässigkeit der Gewebe in unerwünschter Weise ansteigt.

Unter mittlerer Öffnungslänge ist der durchschnittliche Abstand der Verwirbelungspunkte in einem Garn zu verstehen. Unter Verwirbelungspunkt, wofür teilweise auch der Ausdruck Tangelknoten gebräuchlich ist, wird eine Verwirbelungsstelle im Garn, an deren Beginn bei der Öffnungslängenmessung ein Meßsignal ausgelöst wird, verstanden. Diese Verwirbelungspunkte, die durch Filamentverkreuzungen im Garn vorgebildet sind, führen, wenn durch einen entsprechenden Verwirbelungsgrad der Meßnadel ein bestimmter Widerstand entgegengesetzt wird, zu einem Meßsignal.

Für die Messung der Öffnungslänge sind in der Chemiefaserund Textilindustrie verschiedene Meßverfahren bekannt, deren Ergebnisse untereinander nicht immer vergleichbar sind. Die hier genannten Werte wurden ausschließlich mit dem Rothschild Automatic Yarn-Entanglement Tester, Type R-2040, bestimmt.

Bei der Messung mit diesem Gerät wird das zu prüfende Garn über zwei Hysteresisbremsen derart vorgespannt, daß die Fadenspannung am Eingang der eigentlichen Meßstrecke 1,8 cN/tex beträgt. Nach einer Vorlauflänge wird das Garn von zwei Fadenführern erfaßt und gespreizt, wonach eine Meßnadel den Faden durchsticht. Nach Erreichen einer einstellbaren Spitzenspannung, dem sogenannten Trip Level, wird ein Meßsignal ausgelöst, die inzwischen durchlaufene Garnlänge durch ein elektronisches Zählrelais ermittelt und in einem Speicherwerk registriert. Danach wird das Garn automatisch weitergezogen und der Meßzyklus beginnt von neuem. Im Interesse der Ermittlung gut reproduzierbarer Werte ist es angebracht, zur Bestimmung der Öffnungslänge 200 Einzelmessungen durchzuführen und aus diesen den Mittelwert zu bilden.

Ein weiterer sehr wichtiger Parameter für eine problemlose Verarbeitung von getangelten feinfilamentigen Garnen zu Airbaggeweben ist die Stabilität der Verwirbelungspunkte, teilweise als Tangelknotenfestigkeit bezeichnet.

Hierunter ist die Beständigkeit der Verwirbelungspunkte gegen die auf der Webmaschine unvermeidlichen Zugbeanspruchungen zu verstehen. Eine geringe Verwirbelungspunkt-Stabilität führt zum Auflösen dieser im Filamentgarn beim Tangelpropzess vorgebildeten Filamentverkreuzungen bei Zug- und Spannungsbelastungen des Garnes, wodurch der durch das Tangeln bezweckte Effekt des Garnschlußes und des guten Einbindens der Einzelfilamente in den Garnverband vollständig oder partiell verloren geht.

Die Messung der Verwirbelungspunkt-Stabilität erfolgt nach demselben Meßprinzip wie die Tangellängenmessung. Hierzu wird ebenfalls auf dem Rothschild Automatic Yarn-Entanglement Tester, Type R-2040, gearbeitet.

Zur Messung der Stabilität der Verwirbelungspunkte wird einmal mit einem Trip-Level von 20 cN, was der normalen Öffnungslängenmessung entspricht, gearbeitet, zum anderen wird der Trip-Level auf 80 cN eingestellt. Hierbei ergeben sich zwei Meßwerte für die Öffnungslänge, wobei im Normalfall der Wert für den Trip Level 80 cN höher ist als der Wert für den Trip Level 20 cN. Aus diesen beiden Meßwerten wird nach der Formel

$$K1 = \frac{\text{mittlere Öffnungslänge bei 20 cN Trip-Level}}{\text{mittlere Öffnungslänge bei 80 cN Trip-Level}}$$

der Koeffizient K1 für die Stabilität der Verwirbelungspunkte errechnet.

Wesentlich für die Verarbeitungseigenschaften ist aber die Stabilität der Verwirbelungspunkte bei bzw. nach einer Spannnungsbeanspruchung, wie sie auf der Webmaschine, besonders bei Kettgarnen, unvermeidlich ist. Aus diesem Grunde ist es notwendig, zur Beurteilung der gewünschten Verarbeitungseigenschaften des Filamentgarnes dieser Spannungsbeanspruchung Rechnung zu tragen.

Hierzu erfolgen wieder zwei Öffnungslängenmessungen nach den bereits beschriebenen Meßprinzipien. Einmal wird als Ausgangsmessung eine Öffnungslängenmessung mit einem Trip Level von 80 cN durchgeführt. Zum anderen erfolgt ein Umspulen des Garnes unter einer definierten Spannung von 0,32 cN/dtex. Nach dem Umspulen wird eine weitere Öffnungslängenmessung mit einem Trip-Level von 80 cN, vorgenommen. Aus dem mit einem Trip-Level von 80 cN gemessenem Ausgangswert und aus dem nach dem Umspulen, ebenfalls bei einem Trip-Level von 80 cN, ermittelten Wert wird dann nach der nachstehenden Formel der Koeffizient K2 für die Stabilität der Verwirbelungspunkte errechnet:

$$K2 = \frac{\text{Mittl. Öffn.l. bei Ausgangsm. bei 80 cN Trip-Level}}{\text{Mittl. Öffn.l. gem. bei 80 cN Trip-Level nach Umsp.}}$$

Die gewählten Abkürzungen bedeuten hier: Mittl.=Mittlere, Öffn.l.=Öffnungslänge, gem.=gemessen, Ausgangsm.= Ausgangsmessung, Umsp.=Umspulung.

Aus der gemeinsamen Bewertung beider Koeffizienten kann ein praxisgerechtes Urteil über die Eignung der getangelten Garne für die Herstellung von Airbaggeweben abgeleitet werden. Versuche haben gezeigt, daß feintitrige Garne mit einem Koeffizienten K1 über 0,6, der bevorzugt zwischen 0,6 und 0,9 liegen sollte sowie einem Koeffizienten K2 über 0,3, der bevorzugt zwischen 0,3 und 0,9 liegen sollte, bei einer mittleren Öffnungslänge von 2 - 10 cm nicht nur eine problemlose Gewebeherstellung auf der Webmaschine ermöglichen, sondern auch Gewebe ergeben, die den Anforderungen an Airbaggewebe voll gerecht werden.

Wie schon oben ausgeführt, besteht die Gefahr eines Festigkeits- oder Dehnungsrückgangs beim Unterschreiten einer mittleren Öffnungslänge von 2 cm. Auch beide genannten Parameter können eventuell zurückgehen. Diese Reduzierung der Garnfestigkeit und/oder der Garndehnung kann auch, wie Versuche gezeigt haben und wie auch aus den Ausführungsbeispielen hervorgeht, in dem beanspruchten Bereich der Öffnungslänge von 2 - 10 cm eintreten. Da aber, im Hinblick auf die Gebrauchstüchtigkeit, besonders von Airbaggeweben, sowohl die Garnfestigkeit als auch die Garndehnung in den oben angegebenen Bereichen liegen müssen, ist diesem Aspekt bei der Herstellung der erfindungsgemäßen Garne eine besondere Beachtung zu schenken.

Es erscheint deshalb zweckmäßig, in die Beurteilung der für die Herstellung von Airbaggeweben oder anderen Technischen Geweben vorgesehenen Garne einen weiteren Koeffizienten K3 mit einzubeziehen. Dieser errechnet sich aus dem Koeffizienten K2 für die Stabilität der Verwirbelungspunkte, der Garn-Festigkeit und der Garn-Dehnung nach der folgenden Formel:

$$K3 = K2 \bullet Rh \bullet e$$

Hierbei bedeuten:

K2 = Stabilitätskoeffizient der Verwirbelungspunkte nach dem Umspulen unter Spannung, bestimmt und berechnet nach der oben beschriebenen Verfahrensweise

Rh = Festigkeit des Garnes in cN/tex

e = Dehnung des Garnes in %

Alle diese drei hier genannten Koeffizienten können, wie noch in den Ausführungsbeispielen gezeigt wird, unabhängig von der mittleren Öffnungslänge durch die Geometrie der Verwirbelungsdüse beeinflußt werden.

Der Koeffizient K3 sollte einen Wert von 400 nicht unterschreiten, bevorzugt wird ein Wert über 600.

Die erfindungsgemäßen Garne können in verschiedenen Gewebebindungen zu Geweben verarbeitet werden. Bevorzugt wird eine Leinwandbindung, aber auch andere Bindungen wie Panama, Köper, Rips etc. sind anwendbar.

Um in Kett- und Schußrichtung der Gewebe gleiche Festigkeiten zu erreichen, erfolgt die Herstellung der Gewebe bevorzugt in einer symmetrischen Gewebeeinstellung, das heißt, mit gleichen oder nahezu gleichen Fadenzahlen in Kette und Schuß. Die einzusetzenden Fadenzahlen sind vom gewählten Garntiter und von der gewünschten Gewebedichte abbhängig. Beispiele einiger Fadenzahlen für Kontaktgewebe, die aber nicht einschränkend verstanden werden sollen, sind:

| Garn-Titer | Fadenzahl/cm |
|------------|--------------|
| 235 dtex | 26 - 32 |
| 350 dtex | 22 - 28 |
| 470 dtex | 18 - 23 |
| 700 dtex | 14 - 18 |
| 940 dtex | 11,5 - 15,5 |

Bei der Herstellung von Filtergeweben für Airbags wird normalerweise mit niedrigeren Fadenzahlen gearbeitet. Hier sind die Fadenzahlen auf die gewünschte Luftdurchlässigkeit der Filtergewebe abzustimmen. Eine andere Möglichkeit zur Herstellung von Filtergeweben ist die Variation der Gewebebindung.

Verglichen mit Garnen mit Filamenten höheren Filamenttiters (beispielsweise über 5 dtex) liegen die Fadenzahlen, bei gleichem Garntiter, bei Einsatz der erfindungsgemäßen Garne um ca. 1/cm niedriger. Mit diesem geringeren Materialeinsatz können mit den erfindungsgemäßen Garnen kostengünstig Gewebe der gewünschten Gewebedichte bzw. der gewünschten Luftdurchlässigkeit hergestellt werden.

Noch deutlicher macht sich der Vorteil der erfindungsgemäßen Garne bei einem niedrigen Garntiter von beispielsweise 235 dtex bemerkbar. Hier ist es sogar möglich, mit 2 Fäden pro cm weniger im Vergleich zu Garnen gleichen Garn-, aber höheren Filamenttiters (beispielsweise über 5 dtex) zu arbeiten. Die Materialeinsparung und der Kostenvorteil wird hier also noch deutlicher als bei Garnen mit einem Garntiter von beispielsweise 470 dtex.

Die hier als Beispiele genannten Zahlen gelten für Leinwandbindungen.

Die Gewebe aus Polyamidgarnen können zur Einstellung der geforderten Luftdurchlässigkeit einer Naßbehandlung unterzogen werden. Bei dieser erfolgt eine Schrumpfauslösung und ein weitgehender Porenschluß des Gewebes, wodurch die gewünschte Luftdurchlässigkeit eingestellt wird. Ein hierfür geeignetes Verfahren wurde in EP-A 436 950 beschrieben. Bei der nachfolgenden Trocknung sind, im Interesse einer guten Alterungsbeständigkeit der hergestellten Airbaggewebe, besondere Verfahrensschritte zu beachten, was in EP-A 523 546 im einzelnen erläutert wurde.

Gewebe aus Polyesterfasern müssen die Naßbehandlung nicht durchlaufen. Sie können direkt nach der Gewebeherstellung einer Thermofixierbehandlung unterzogen werden. Ein geeignetes Verfahren wurde in EP-A 523 546 beschrieben.

Außerdem ist es auch möglich, mit einer hohen Gewebedichte hergestellte Gewebe in sogenanntem stuhlrohen Zustand zur Herstellung von Airbags zu verwenden. Da die eingesetzten Garne meistens von der Herstellung her mit einer Präparation versehen sind, empfiehlt sich jedoch eine Waschbehandlung, um diese Präparation zu entfernen, da die Präparation bei langer Lagerung, zum Beispiel im Lenkrad eines Kraftfahrzeugs, eventuell ein Nährboden für die Bildung von Mikroorganismen sein kann.

Mit den erfindungsgemäßen Garnen lassen sich in besonders vorteilhafter Weise Technische Gewebe, besonders Gewebe für Airbags, herstellen. Neben der Möglichkeit, unter kostengünstigen Bedingungen Gewebe herstellen zu können, ist ein weiterer Vorteil der erfindungsgemäßen Garne, daß hiermit Gewebe erhalten werden, die alle Forderungen, die beispielsweise an Airbaggewebe gestellt werden, in besonders vorteilhafter Weise erfüllen.

Ausführungsbeispiele

Ausführungsbeispiel Nr. 1:

Ein Polyamid 6.6-Filamentgarn mit einem Garntiter 470 dtex und einer Filamentzahl von 144, woraus sich ein Filamenttiter von 3,3 dtex ergibt, wurde Tangelversuchen mit verschiedenen Tangeldüsen unterzogen. Das Ausgangsgarn hatte eine Festigkeit von 66,9 cN/tex und eine Dehnung von 20,1%.

Die vier verschiedenen Tangeldüsen, die nachstehend mit den Kennzeichnungen Düse a bis d versehen werden, hatten folgende Dimensionen:

a. Die Düse hatte einen Fadenkanaldurchmesser von 3,5 mm und eine Länge von 35 mm. Der Durchmesser des Blaskanals betrug 2,0 mm, der Einlegeschlitz hatte eine Breite von 0,2 mm.

b. Die Düse entspricht in den Maßen Düse Nr. 1 und unterscheidet sich von dieser nur durch eine zusätzliche Fadenführung vor und hinter der Düse.

c. Die Düse hatte einen Fadenkanaldurchmesser von 3,5 mm und eine Länge von 36 mm. Der Durchmesser des Blaskanals betrug 2,3 mm, der Einlegeschlitz hatte eine Breite von 0,35 mm.

d. Die Düse hatte einen Fadenkanal in Form eines gleichseitigen Dreiecks mit sich über die Kanallänge verändernder Querschnittsfläche. Der Durchmesser des Blaskanals betrug 1,7 mm, die Länge des Fadenkanals 32 mm. Der Einlegeschlitz hatte eine Breite von 0,2 mm.

Die bei den Tangelversuchen mit diesen Düsen erhaltenen Ergebnisse sind in der nachstehenden Tabelle zusammengestellt:

| Versuch Nr. | 1a | 1b | 1c | 1d |
|---|---|---|---|---|
| Festigkeit cN/tex | 66,5 | 66,6 | 65,4 | 66,8 |
| Dehnung % | 19,9 | 19,5 | 18,3 | 19,2 |
| Mittl. Öffnungsl. cm | 4,6 | 2,9 | 3,3 | 5,2 |
| K1 | 0,85 | 0,86 | 0,76 | 0,72 |
| K2 | 0,77 | 0,93 | 0,60 | 0,39 |
| K3 | 1019 | 1208 | 718 | 500 |

Ausführungsbeispiel Nr. 2:

Versuch 1 wurde wiederholt, wobei allerdings nun ein Polyamid 6.6-Filamentgarn mit einem Garntiter 350 dtex und einer Filamentzahl von 144, woraus sich ein Filamenttiter von 2,4 dtex ergibt, zum Einsatz kam. Wieder erfolgte die Tangelung in den in Ausführungsbeispiel 1 beschriebenen Versuchsdüsen a bis d. Das Ausgangsgarn hatte eine Festigkeit von 66,5 cN/tex und eine Dehnung von 20,3 %.

Die bei diesen Versuchen erhaltenen Ergebnisse sind in der nachstehenden Tabelle zusammengestellt:

| Versuch Nr. | 2a | 2b | 2c | 2d |
|---|---|---|---|---|
| Festigkeit cN/tex | 64,5 | 66,2 | 64,2 | 66,9 |
| Dehnung % | 18,1 | 18,5 | 18,1 | 20,2 |
| Mittl. Öffnungsl. cm | 6,7 | 6,6 | 7,7 | 6,2 |
| K1 | 0,73 | 0,75 | 0,72 | 0,69 |
| K2 | 0,77 | 0,81 | 0,48 | 0,37 |
| K3 | 899 | 992 | 558 | 500 |

Ausführungsbeispiel Nr. 3:

Es erfolgte eine weitere Wiederholung von Versuch 1, dieses Mal nun mit einem Polyamid 6.6-Filamentgarn mit einem Garn-titer 700 dtex und einer Filamentzahl von 140, woraus sich ein Filamenttiter von 5,0 dtex ergibt. Wieder erfolgte die Tangelung in den in Ausführungsbeispiel 1 beschriebenen Versuchsdüsen a bis d. Das Ausgangsgarn hatte eine Festigkeit von 68,2 cN/tex und eine Dehnung von 19,8%.

Die bei diesen Versuchen erhaltenen Ergebnisse sind in der nachstehenden Tabelle zusammengestellt:

| Versuch Nr. | 3a | 3b | 3c | 3d |
|---|---|---|---|---|
| Festigkeit cN/tex | 68,4 | 68,8 | 66,3 | 66,7 |
| Dehnung % | 19,0 | 20,1 | 18,7 | 19,2 |
| Mittl. Öffnungsl. cm | 4,5 | 3,6 | 2,9 | 3,7 |
| K1 | 0,87 | 0,78 | 0,79 | 0,79 |
| K2 | 0,75 | 0,86 | 0,68 | 0,57 |
| K3 | 975 | 1182 | 843 | 730 |

Ausführungsbeispiel Nr. 4:

Eine weitere Wiederholung von Versuch 1 erfolgte mit einem Polyestergarn, das den gleichen Titer (700 f 140) aufwies wie das in Ausführungsbeispiel 3 eingesetzte. Der Filamenttiter lag also wieder bei 5,0 dtex. Wieder erfolgte die Tangelung in den in Ausführungsbeispiel 1 beschriebenen Versuchsdüsen a bis d. Das Ausgangsgarn hatte eine Festigkeit von 69,7 cN/tex und eine Dehnung von 17,8 %.

Die bei diesen Versuchen erhaltenen Ergebnisse sind in der nachstehenden Tabelle zusammengestellt:

| Versuch Nr. | 4a | 4b | 4c | 4d |
|---|---|---|---|---|
| Festigkeit cN/tex | 69,0 | 69,2 | 68,0 | 67,7 |
| Dehnung % | 17,0 | 18,1 | 17,7 | 17,0 |
| Mittl. Öffnungsl. cm | 4,6 | 4,2 | 2,7 | 5,5 |
| K1 | 0,83 | 0,82 | 0,78 | 0,84 |
| K2 | 0,84 | 0,85 | 0,78 | 0,65 |
| K3 | 985 | 1064 | 938 | 748 |

Wie die durchgeführten Versuche zeigen, kommt der Auswahl der Tangeldüse bei der Herstellung des erfindungsgemäßen Garnes eine entscheidende Bedeutung zu. Die Düsengeometrie übt einen erheblichen Einfluß auf die Stabilitätskoeffizienten der Verwirbelungspunkte aus, was sich wenig im K1-Wert, aber wesentlich deutlicher im K2-Wert ausdrückt. Der angestrebte K2-Wert über 0,3 wurde zwar bei allen eingesetzten Düsen erreicht, aber bei den Versuchsdüsen c und d nicht so deutlich überschritten wie bei den Versuchsdüsen a und b .

Noch deutlicher wird der Unterschied zwischen den Versuchsdüsen, wenn die Beurteilung auf Basis des K3-Wertes erfolgt, wenn also der bei der Tangelung eventuell eintretende Rückgang der Festigkeit und der Dehnung in die Beurteilung mit einbezogen wird. Hier wurde zwar der angestrebte Wert von über 400 jeweils überschritten, der bevorzugte Bereich von über 600 aber nicht in jedem Falle erreicht. Auch hier zeigt sich wieder, daß die Versuchsdüsen a und b günstigere Werte liefern als die Versuchsdüsen c und d. Auch innerhalb der beiden Düsenpaare ist ein Unterschied erkennbar. Düse b zeigt bessere Werte als Düse a und Düse c bessere Werte als Düse d.

**Patentansprüche**

1. Getangeltes ungeschlichtetes Synthesefilamentgarn, besonders Synthesefilamentgarn für die Herstellung von Airbaggeweben und anderen Technischen Geweben, mit einem Garntiter von 100 - 1 000 dtex, dadurch gekennzeichnet, daß die Einzelfilamente des Garnes einen Titer nicht über 5 dtex aufweisen, daß das Garn eine mittlere Öffnungslänge von 2 - 10 cm aufweist, daß der Koeffizient K1 für die Stabilität der Verwirbelungspunkte des Garnes über 0,6 und der Koeffizient K2 für die Stabilität der Verwirbelungspunkte des Garnes über 0,3 liegt.

2. Synthesefilamentgarn nach Anspruch 1, dadurch gekennzeichnet, daß der aus Garnfestigkeit, Garndehnung und Stabilitätskoeffizienten K2 errechnete Koeffizient K3 über 400 liegt.

3. Synthesefilamentgarn nach mindestens einem der Ansprüche 1 - 2, dadurch gekennzeichnet, daß das Garn aus Polyamid- oder Polyesterfilamenten besteht.

4. Synthesefilamentgarn nach Anspruch 3, dadurch gekennzeichnet, daß das Garn aus Polyamid 6.6-, Polyamid 4.6-oder Polyamid 6-Filamenten besteht.

5. Technisches Gewebe, bestehend aus einem getangelten Synthesefilamentgarn mit einem Garntiter von 100 - 1 000 dtex, dadurch gekennzeichnet, daß der Titer der Einzelfilamente dieses Garnes nicht über 5 dtex ist und daß das Garn vor dem Verweben eine mittlere Öffnungslänge von 2 - 10 cm, einen Koeffizienten K1 für die Stabilität der Verwirbelungspunkte des Garnes über 0,6 und einen Koeffizienten K2 für die Stabilität der Verwirbelungspunkte des Garnes über 0,3 aufweist.

6. Gewebe für Airbags, bestehend aus einem getangelten Synthesefilamentgarn mit einem Garntiter von 100 - 1 000 dtex , dadurch gekennzeichnet, daß der Titer der Einzelfilamente dieses Garnes nicht über 5 dtex ist und daß das Garn vor dem Verweben eine mittlere Öffnungslänge von 2 - 10 cm, einen Koeffizienten K1 für die Stabilität der Verwirbelungspunkte des Garnes über 0,6 und einen Koeffizienten K2 für die Stabilität der Verwirbelungspunkte des Garnes über 0,3 aufweist.

## Claims

1. Intermingled unsized synthetic filament yarn, particularly synthetic filament yarn for making woven fabrics for air bags and other industrial applications, with a yarn titer of 100-1 000 dtex, characterized in that the individual filaments of the yarn have a titer not exceeding 5 dtex, that the yarn exhibits a mean opening length of 2-10 cm, and that the coefficient K1 for the stability of the intermingling points of the yarn exceeds 0.6 and the coefficient K2 for the stability of the intermingling points of the yarn exceeds 0.3.

2. Synthetic filament yarn in accordance with Claim 1, characterized in that the coefficient K3 derived from the yarn strength, yarn elongation, and stability coefficient K2 exceeds 400.

3. Synthetic filament yarn in accordance with at least one of Claims 1-2, characterized in that the yarn comprises polyamide or polyester filaments.

4. Synthetic filament yarn in accordance with Claim 3, characterized in that the yarn comprises nylon-6,6, nylon-4,6, or nylon-6 filaments.

5. Industrial woven fabric comprising an intermingled synthetic filament yarn with a yarn titer of 100-1 000 dtex, characterized in that the titer of the individual filaments of this yarn does not exceed 5 dtex and that the yarn prior to weaving has a mean opening length of 2-10 cm, a coefficient K1 for the stability of the intermingling points of the yarn exceeding 0.6, and a coefficient K2 for the stability of the intermingling points of the yarn exceeding 0.3.

6. Woven fabric for air bags, comprising an intermingled synthetic filament yarn with a yarn titer of 100-1 000 dtex, characterized in that the titer of the individual filaments of this yarn does not exceed 5 dtex and that the yarn prior to weaving has a mean opening length of 2-10 cm, a coefficient K1 for the stability of the intermingling points of the yarn exceeding 0.6, and a coefficient K2 for the stability of the intermingling points of the yarn exceeding 0.3.

## Revendications

1. Fil en filaments synthétiques sans apprêt, entrelacés, en particulier fil en filaments synthétiques pour la fabrication de tissus pour coussins gonflables de sécurité et autres tissus techniques, lequel fil présente un titre de 100 - 1000 dtex, caractérisé en ce que les filaments individuels du fil présentent un titre non supérieur à 5 dtex, en ce que le fil présente une longueur moyenne d'ouverture de 2 - 10 cm, en ce que le coefficient K1 de stabilité des points d'entrelacement du fil est supérieur à 0,6, et que le coefficient de stabilité K2 des points d'entrelacement du fil est supérieur à 0,3.

2. Fil en filaments synthétiques selon la revendication 1, caractérisé en ce que le coefficient K3, calculé à partir de la résistance du fil, de l'allongement du fil et du coefficient de stabilité K2, est supérieur à 400.

3. Fil en filaments synthétiques selon au moins l'une des revendications 1 - 2, caractérisé en ce que le fil est constitué de filaments de polyamide ou de polyester.

4. Fil en filaments synthétiques selon la revendication 3, caractérisé en ce que le fil est constitué de filaments en polyamide 6.6, en polyamide 4.6 ou en polyamide 6.

5. Tissu technique constitué d'un fil en filaments synthétiques entrelacés, avec un titre de fil de 100 - 1000 dtex, caractérisé en ce que le titre des filaments individuels de ce fil n'est pas supérieur à 5 dtex et en ce qu'avant le tissage, le fil présente une longueur moyenne d'ouverture de 2 - 10 cm, un coefficient K1 de stabilité des points d'entrelacement du fil supérieur à 0,6 et un coefficient K2 de stabilité des points d'entrelacement du fil supérieur à 0,3.

6. Tissu pour coussins gonflables de sécurité, constitué d'un fil en filaments synthétiques entrelacés, avec un titre de fil de 100 - 1000 dtex, caractérisé en ce que le titre des filaments individuels de ce fil n'est pas supérieur à 5 dtex et en ce qu'avant le tissage, le fil présente une longueur moyenne d'ouverture de 2 - 10 cm, un présente une longueur moyenne d'ouverture de 2 - 10 cm, un coefficient K1 de stabilité des points d'entrelacement du fil supérieur à 0,6 et un coefficient K2 de stabilité des points d'entrelacement du fil supérieur à 0,3.